Europäisches Patentamt

European Patent Office

Office européen des brevets

(19)

(11) Publication number: **0 194 986 B1**

# EUROPEAN PATENT SPECIFICATION

(12)

(45) Date of publication of patent specification: **22.04.92**

(51) Int. Cl.⁵: **C09D 133/08**, C08F 220/00, C08F 226/00

(21) Application number: **86870021.2**

(22) Date of filing: **18.02.86**

(54) **Radiation curable coating composition.**

(30) Priority: **27.02.85 US 706445**

(43) Date of publication of application:
**17.09.86 Bulletin 86/38**

(45) Publication of the grant of the patent:
**22.04.92 Bulletin 92/17**

(84) Designated Contracting States:
**AT BE CH DE FR GB IT LI LU NL SE**

(56) References cited:
**EP-A- 0 029 105**

(73) Proprietor: **U C B, S.A.**
**326, Avenue Louise**
**B-1050 Bruxelles(BE)**

(72) Inventor: **Boeckeler, Rudolph H.**
**1974, Maple Court**
**Grafton Wisconsin 53024(US)**

(74) Representative: **Dusseldorp, Raymond et al**
**U.C.B. S.A. Département D.T.B. 326, avenue**
**Louise, Bte 7**
**B-1050 Bruxelles(BE)**

Rank Xerox (UK) Business Services

## Description

The present invention relates specifically to the art of radiation curable coatings. More specifically, the present invention relates to coatings which have improved scratch, stain and chemical resistance and improved adhesion to a variety of substrates.

It is known in the coating industry that a coating film can be applied to substrates for a variety of purposes. However, the industry has long sought coatings which can protect substrates from the abuses of scratching, staining and solvent attack. The problem is especially important where the substrate to be coated is a delicate one.

Many of the coatings developed to this time are thermally cured, and a number of thermally cured substrates do exhibit good abrasion and chemical resistance. While suitable for some applications, the coating of substrates using thermally curable compositions have several significant drawbacks. First, the curing process requires the input of thermal energy, usually for a long period of time, to remove the solvent for the composition. In addition to the expense of the energy and the time constraints imposed on the overall coating process, the thermal cure step can be damaging to the substrate, and this factor in some instances can be so limiting as to make coating of some substrates by this process impossible. A second drawback of thermally curable systems is the emission of volatile solvents, which in many cases causes problems from an environmental standpoint.

In attempting to overcome the aforementioned drawbacks of the thermally curable systems, the coating industry has also investigated the use of radiation curable systems. The compositions in this area of technology are usually 100% solids, thus eliminating the solvent emission problem. They also require relatively little energy for curing, thus reducing the cost and time factors mentioned above.

Radiation curable systems of the prior art, however, have other drawbacks. For example, the art systems have typically suffered from one or more of the following problems: poor abrasion, stain and chemical resistance; poor adhesion to substrates; brittleness; high viscosity; slow curing time and physiological and/or ecological hazards.

One prior art radiation curable system which overcomes some of these problems is disclosed in United States Patent No. 4,319,811 (and the corresponding European Patent application No. 29105) entitled "Abrasion Resistance Radiation Curable Coating". The coating composition of this patent includes a triacrylate or tetraacrylate mixed with a second monomer having an N-vinyl imido group. The preferred acrylate materials are pentaerythritol triacrylate (PETA) and trimethylolpropane triacrylate (TMPTA). The preferred second monomers are N-vinyl-2-pyrrolidone or N-vinylcaprolactam. If curing is by ultra-violet light, a photoinitiator is also added to the mixture.

While improved abrasion and chemical resistance and improved adhesion are purportedly obtained using the coatings of the aforesaid patent, all of the aforementioned problems of radiation curable systems are not overcome, and it would represent a significant advance in the art of radiation curable systems to provide a system with better properties than those exhibited by the compositions disclosed in United States Patent No. 4,319,811.

It is a principal object of the present invention to provide radiation curable coating compositions which overcome the aforementioned disadvantages of the prior art.

Another object of the present invention is to provide a coating composition which provides improved properties over the coating compositions of the aforesaid U.S. Patent No. 4,319,811.

Yet another object of the present invention is to provide a coating composition which yields a coating having improved scratch, stain and solvent resistance.

A still further object of the present invention is to provide a coating composition which yields a coating which exhibits excellent adhesion to a variety of substrates.

How these and other objects of the invention are accomplished will be described in the following specification. Generally, however, the objects are accomplished by providing a 100% solids radiation curable coating composition which comprises a mixture of the following :

(a) from about 65 to 95% by weight of at least one polyfonctional monomer selected from the group consisting of dipentaerythritol pentaacrylate, dipentaerythritol hexaacrylate and mixtures thereof; and

(b) from about 5 to 35% by weight of at least one N-vinyl imido group containing monomer.

A photoinitiator is provided if the cure is to be by ultra-violet light. No photoinitiator is required if the cure is to be by electron beam.

When exposed to a radiation, the aforementioned compositions crosslink to form a film which is extremely hard and abrasion resistant. When tested for abrasion resistance, the cured coatings of the present invention have been found to be superior to coatings based on the tri- or tetraacrylate monomers of the prior art, and the skin and eye irritation caused by the polyfunctional monomers of the present invention

2

are substantially less than those caused by lower molecular weight tri- and tetraacrylates, such as PETA.

Before proceeding to a description of the polyfunctional monomers of the present invention, it should be mentioned that the coatings to be described are especially useful as protective films for plastic substrates such as polycarbonates, polymethyl methacrylates, polyolefins, polystyrenes, polyvinyl chlorides, polyalkylene terephthalates, polyesters, polyurethanes, metallised plastics, polyamides, as well as copolymers such as acrylonitrile-butadiene-styrene (ABS), cellulose acetate butyrate (CAB) etc. In addition to coating plastics, the compositions of the present invention are also useful for coating other materials such as wood, metal, paper, glass and ceramics.

The coating composition of the present invention can be applied by conventional coating techniques such as spraying, brushing, dipping, rolling, curtain coating and other known techniques.

Proceeding now to a description of the components of the coating composition of the present invention, the preferred polyfunctional acrylate is dipentaerythritol hexaacrylate. An other suitable polyfunctional acrylate useful in the present invention is dipentaerythritol pentaacrylate. In each case, five or more acryloyloxy groups are provided. Mixtures of such materials can also be used in the present invention.

The N-vinyl imido group containing monomer is preferably N-vinyl-2-pyrrolidone. In the testing which has been done on coatings of the present invention, it has been found that N-vinyl-2-pyrrolidone gives improved abrasion resistance over the other monomers tested.

Photoinitiators are employed if the coatings of the present invention are to be cured by exposure to ultra-violet light. Suitable photoinitiators which can be employed include organic carbonyl compounds such as benzophenones, benzanthrones, benzoins and alkyl ethers thereof, 2,2-diethoxyacetophenone, 2,2-dimethoxy-2-phenyl-acetophenone, 4'-phenoxy-2,2-dichloroacetophenone, (2-hydroxycyclohexyl) phenyl ketone, 2,2-dimethyl-2-hydroxyacetophenone, 1-phenyl-1,2-propanedione 2-[O-(ethoxycarbonyl)oxime] and copolymerisable benzophenone derivatives such as the product sold under the trade mark Ebecryl 19-6636 by Radcure Specialities, Inc., of Port Washington, Wisconsin.

As to the preferred proportions, the polyfunctional monomer should comprise about from 65 to 95% by weight of the coating composition, the N-vinyl imido group containing monomer from about 5 to 35% by weight of the composition and, if a photoinitiator is used, it comprises from about 0.2% to about 10% by weight of the overall composition.

Additives known in the coating art may be employed for controlling flow and leveling, pigmentation, gloss, lubrication, reinforcement, etc. Preferred materials for controlling flow and leveling are the silicone surfactants, such as those sold under the trademark "DC-193" by the Dow Corning Corporation. Also useful for such purposes are fluorocarbons, such as the ones sold under the trademark "FC-430" by the 3M Company. Such additives are typically employed in small amounts, such as about 0.005 to about 2.5% by weight based on the weight of the overall composition. Furthermore, a small amount of solvent can be employed (for example, less than 5% by weight) to facilitate application of the coating.

The coating composition of the present invention can be cured quickly with electron beams or, if the coating composition includes a photoinitiator, with ultra-violet light. If the latter is used, 80 watt per cm mercury vapour lamps are suitable. Cure speed and abrasion resistance can be improved if ultra-violet light exposure is accomplished in an oxygen free atmosphere, and it has been found that increased exposure generally leads to enhanced abrasion resistance.

The coating compositions of the present invention will be illustrated by reference to the following examples, but before the examples are presented, several characteristics of the compositions will be illustrated by reference to Tables I and II. The Tables are provided to illustrate how the coating composition properties will vary depending on the type of photoinitiator used and on the weight ratio of polyfunctional monomer to N-vinyl-2-pyrrolidone monomer, respectively. In these Tables, comparisons are noted of the "haze rank." Haze has been measured by scratching the cured coatings with steel wool under constant pressure and visually observing the resulting haziness. In the Tables, the higher the haze number, the poorer the scratch resistance. The films tested in these Tables were applied on glass at a coating thickness of 5-10 micrometers with a No.6 wire-wound rod and cured by exposure to a Linde Model PSCU-MPHG inerted UV cure unit. The photoinitiator used in Table II consisted of 4.0% by weight of 2,2-dimethoxy-2-phenyl-acetophenone (Irgacure 651, sold by Ciba Geigy).

EP 0 194 986 B1

TABLE I

| Photoinitiator (4%) | Haze rank | Color retention 1361 hours QUV weatherometer |
|---|---|---|
| 2,2-dimethoxy-2-phenylacetophenone | 3 | moderate yellowing |
| (2-hydroxycyclohexyl) phenyl ketone | 2 | very slight yellowing |
| 2,2-dimethyl-2-hydroxyacetophenone | 1 | very slight yellowing |
| Acrylated benzophenone derivative[*] (Ebecryl 19-6636) | 4 | severe yellowing |

* 10.7% by weight

TABLE II

| Coating No. | DPHA/VP (weight %) | Viscosity cps (25°C) | Curing rate (m/min) | Haze rank |
|---|---|---|---|---|
| A | 100/0 | 8660 | 18.3 | 2 |
| B | 89.6/10.4 | 1480 | 27.4 | 1 |
| C | 79.2/20.8 | 300 | 38.1 | 1 |
| D | 68.8/31.2 | 100 | 30.5 | 3 |
| E | 58.3/41.7 | 431 | 25.9 | 4 |

DHPA = Dipentaerythritol hexaacrylate.

VP = N-vinyl-2-pyrrolidone.

Example 1.

Steel wool abrasion resistance was measured for compositions based on tri-, tetra-, penta- and hexaacrylate monomers mixed in an 80/20 weight ratio with N-vinyl-2-pyrrolidone and containing 4 weight percent Irgacure 651. Films were applied by No.6 wire-wound rod to poly(methyl methacrylate) panels produced by Plaskolite Company. The coatings were cured at 30.5 m per minute under 0.4 watt per cm mercury vapour lamps in inert atmosphere, followed by cure in air under 40 watt per cm mercury vapour lamps (Linde PSCU-MPHG unit).

Abrasion resistance was tested by rubbing the coating with ten strokes using steel wool of varying degress of coarseness ranging from No. 00 (very fine), No. 0 (fine), No. 1 (medium), to No. 2 (coarse). The results are summarised in Table III.

TABLE III

| No. | Acrylate | Viscosity cps (25°C) | Steel wool resistance |
|---|---|---|---|
| A | TMPTA | 31 | resists No. 00 scratches easily with No. 0 |
| B | PETA | 25 | resists No. 00 scratches easily with No. 0 |
| C | Dipentaerythritol pentaacrylate | 450 | resists No. 0 scratches with No. 1 |
| D | DPHA | 300 | resists No. 1 scratches with No. 2 |
| E | No coating | - | scratches severely with No. 00 |

TMPTA = Trimethylolpropane triacrylate PETA = Pentaerythritol triacrylate and tetraacrylate (a blend supplied by Radcure Specialities, Inc.)

DPHA = Dipentaerythritol hexaacrylate

Example 2.

Poly(methyl methacrylate) sheet was coated with 5-10 micrometers of DPHA/VP coating composition in

4

a weight ratio of 80/20 and containing 4 weight % 2,2-dimethyl-2-hydroxyacetophenone sold under the trade name Darocure 1173 by E. Merck Company. The film was cured at 30.5 m per minute under 80 watt per cm mercury vapour lamps using an Ashdee Model 18H UV cure unit. The film was tack free, did not scratch after ten rubs with No. 0 steel wool, and was optically clear. When subjected to the cross-hatch adhesion test using 3M Scotch brand No. 600 tape, the coating was not removed from the substrate.

Example 3.

The test conditions of Example 2 were repeated using a polycarbonate substrate sold under the trade name Lexan LS-2 by General Electric Corporation. No coating was removed from the substrate by pulling with the tape.

Example 4.

Coatings prepared from DPHA mixed in an 80/20 weight ratio with VP and containing Irgacure 651 photoinitiator at 4% by weight level based on the total coating weight, were applied at 5-10 micrometers thicknesses to Lexan polycarbonate panels using a No. 6 wire-wound rod. The films were cured to a tack free state at 30.5 m per minute using a Linde PSCU-MPHG unit. The cured coatings were then subjected to various solvent, stain and chemical environments by placing several drops of the liquids on the cured coating and covering with a watch glass. The panels were examined after 8 and 24 hours. Results are shown in Table IV.

TABLE IV

| Solvent resistance and stain tests for DPHA/VP composition | | |
|---|---|---|
| Solvent or stain | Effect after 8 hours | Effect after 24 hours |
| Windex | none | none |
| 40% Sulphuric acid solution | none | none |
| 10% Sodium hydroxide solution | none | none |
| Dichloromethane | blisters | severe blisters |
| Methyl ethyl ketone | none | none |
| Methanol | none | none |
| Acetone | none | none |
| Iodine in alcohol | light yellow stains | severe yellow stains |
| Ketchup | none | none |
| Black crayon | none | none |
| Methylene blue | none | none |
| Coffee | none | none |

While the foregoing examples illustrate the invention and the advantages thereof, they are not intended to be limiting. The limits of the invention are defined in the claims which follow.

**Claims**

1. A 100% solids radiation curable coating composition comprising a mixture of the following :
   (a) from about 65 to 95% by weight of at least one polyfonctional monomer selected from the group consisting of dipentaerythritol pentaacrylate, dipentaerythritol hexaacrylate and mixtures thereof; and
   (b) from about 5 to 35% by weight of at least one N-vinyl imido group containing monomer.

2. Radiation curable coating composition according to claim 1, characterised in that said N-vinyl imido group containing monomer is N-vinyl-2-pyrrolidone.

3. Radiation curable coating composition according to claim 1 or 2, characterised in that said composition further includes from about 0.2 to 10% by weight of photoinitiator.

4. Radiation curable coating composition according to claims 3, characterised in that said photoinitiator is

a substituted acetophenone.

**Revendications**

1.  Composition de revêtement radiodurcissable ayant une teneur en matière sèche de 100%, comprenant un mélange de :
    (a) environ 65 à 95% en poids d'au moins un monomère polyfonctionnel choisi dans le groupe consistant en le pentaacrylate de dipentaérythritol, l'hexaacrylate de dipentaérythritol et leurs mélanges; et
    (b) environ 5 à 35% en poids d'au moins un monomère contenant un groupement N-vinylimido.

2.  Composition de revêtement radiodurcissable selon la revendication 1, caractérisée en ce que ledit monomère contenant le groupement N-vinylimido est la N-vinyl-2-pyrrolidone.

3.  Composition de revêtement radiodurcissable selon la revendication 1 ou 2, caractérisée en ce que ladite composition contient en outre environ 0,2 à 10% en poids d'un photoinitiateur.

4.  Composition de revêtement radiodurcissable selon la revendication 3, caractérisée en ce que ledit photoinitiateur est une acétophénone substituée.

**Patentansprüche**

1.  Strahlungshärtbare Überzugszusammensetzung met einem Feststoffgehalt von 100 Gew.-%, die das folgende Gemisch umfaßt :
    (a) etwa 65 bis 95 Gew.-% von mindestens einem polyfunktionellen Monomer, das aus der Gruppe, bestehend aus Dipentaerythrit-Pentaacrylat, Dipentaerythrit-Hexaacrylat und Gemischen davon, ausgewählt ist; und
    (b) etwa 5 bis 35 Gew.-% von mindestens einem eine N-Vinyl-Imidogruppe enthaltenden Monomer.

2.  Strahlungshärtbare Überzugszusammensetzung nach Anspruch 1, dadurch gekennzeichnet, daß das genannte Monomer, das eine N-Vinyl-Imidogruppe enthält, N-Vinyl-2-Pyrrolidon ist.

3.  Strahlungshärtbare Überzugszusammensetzung nach Anspruch 1 oder 2, dadurch gekennzeichnet, daß die genannte Zusammensetzung weiterhin etwa 0,2 bis 10 Gew.-% eines Photoinitiators enthält.

4.  Strahlungshärtbare Überzugszusammensetzung nach Anspruch 3, dadurch gekennzeichnet, daß der genannte Photoinitiator ein substituiertes Acetophenon ist.